**Europäisches Patentamt**

**European Patent Office**

**Office européen des brevets**

(19)

(11) **EP 1 577 729 A2**

(12) **EUROPÄISCHE PATENTANMELDUNG**

| | |
|---|---|
| (43) Veröffentlichungstag:<br>**21.09.2005 Patentblatt 2005/38** | (51) Int Cl.⁷: **G05D 23/19**, F24D 19/10 |

(21) Anmeldenummer: **05005870.0**

(22) Anmeldetag: **17.03.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **17.03.2004 DE 102004013220**

(71) Anmelder: **MARTIN SANDLER SYSTEMTECHNIK E.K.**
**87600 Kaufbeuren (DE)**

(72) Erfinder: **Sandler, Martin**
**87600 Kaufbeuren (DE)**

(74) Vertreter: **Reinhard - Skuhra - Weise & Partner**
**Postfach 44 01 51**
**80750 München (DE)**

(54) **Verfahren und Vorrichtung zum Bereitstellen von über eine Wärmetauschereinrichtung erwärmtem Brauchwasser und Verfahren zum Betreiben einer Wärmetauschereinrichtung**

(57) Die vorliegende Erfindung schafft ein Verfahren und eine Vorrichtung zum Bereitstellen von über eine Wärmetauschereinrichtung erwärmten Brauchwasser wobei der Wärmetauschereinrichtung (WT) primärseitig Heisswasser über eine durchflussmengenmässig steuerbare Pumpe (P) von einem ersten Eingang (E1) zu einem ersten Ausgang (A1) zugeführt wird und wobei der Wärmetauschereinrichtung (WT) sekundärseitig an einem zweiten Eingang (E2) Brauchwasser zuführt wird und an einem zweiten Ausgang (A2) das erwärmte Brauchwasser entnommen wird, mit den Schritten: Erfassen der Temperatur S1a des dem zweiten Eingang (E2) zugeführten Brauchwassers und der Temperatur S1c des dem ersten Eingang (E1) zugeführten Heisswassers; Erfassen der Temperatur S1d des dem ersten Ausgang (A1) abgeführten Heisswassers; Erfassen der Massenströmung S2a an der Sekundärseite; und Festlegen eines Sollwertes der Massenströmung S2b an der Primärseite unter Berücksichtigung der erfassten Temperaturen S1a, S1c, S1d und der erfassten Massenströmung S2a und einem Sollwert S1b für die Temperatur des erwärmten Brauchwassers; wobei ein Erfassen der Massenströmung S2b an der Primärseite erfolgt; und wobei ein Regeln der Massenströmung S2b an der Primärseite auf den festgelegten Sollwert mittels der Pumpe (P) in Abhängigkeit von der erfassten Massenströmung S2b an der Primärseite. Die Erfindung schafft ebenfalls ein entsprechendes Verfahren zum Betreiben einer Wärmetauschereinrichtung.

Figur 1

EP 1 577 729 A2

**Beschreibung**

Die vorliegende Erfindung betrifft ein Verfahren und Vorrichtung zum Bereitstellen von über eine Wärmetauschereinrichtung erwärmtem Brauchwasser und ein Verfahren zum Betreiben einer Wärmetauschereinrichtung gemäss dem Oberbegriff der Ansprüche 1, 11, bzw. 21, wie aus der DE 43 05 870 C2 bekannt.

Ohne Beschränkung ihrer allgemeinen Verwendbarkeit werden die vorliegende Erfindung sowie die ihr zugrundeliegende Problematik in bezug auf Vorrichtungen zum Bereitstellen von über eine Wärmetauschereinrichtung erwärmtem Brauchwasser im Bereich der Haustechnik erläutert.

Fig. 3 ist eine schematische Querschnittsansicht einer aus der DE 40 35 115 C2 bekannten Vorrichtung zum Bereitstellen von über eine Wärmetauschereinrichtung erwärmtem Brauchwasser.

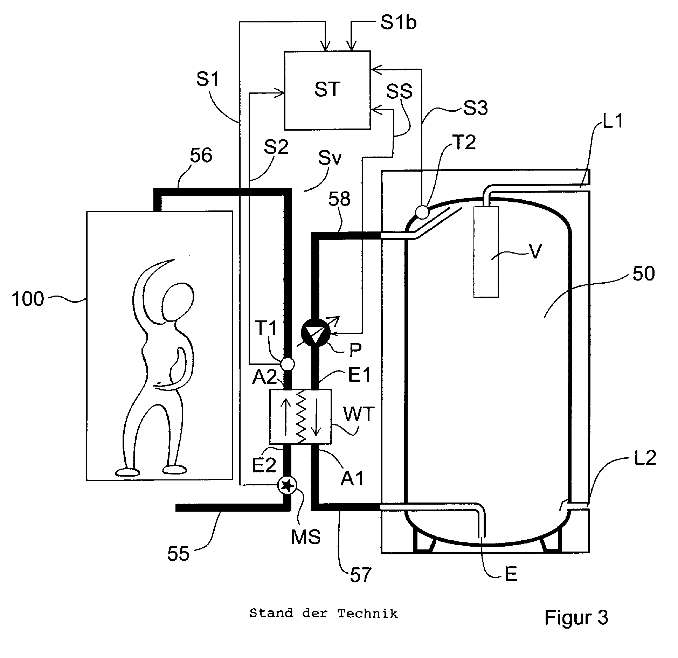

In Fig. 3 bezeichnet Bezugszeichen 50 einen Heißwasserspeicher in Form eines Schichtspeichers, der über eine Leitung L1 und eine im oberen Teil angebrachte Verteilereinrichtung V mit heißem Wasser befüllbar ist. Über eine Leitung L2 kann im unteren Bereich kaltes Wasser entnommen werden. Das Befüllen geschieht typischerweise über eine Heizanlage.

Die Oberseite des Heißwasserspeichers 50 ist an eine Leitung 58 angeschlossen, welche über eine Pumpe P mit einem Eingang E1 der Primärseite eines Wärmetauschers WT verbunden ist. Die Pumpe P ist über ein Steuersignal SS steuerbar, welches von einer Steuereinrichtung ST zugeführt wird. Der Ausgang A1 des Wärmetauschers WT auf der Primärseite ist über eine Leitung 57 mit der Unterseite des Heißwasserspeichers 50 verbunden, wobei die Leitung 57 in den Heißwasserspeicher 50 hineingeführt ist und dicht über dessen Boden in einem Rückflusseinlass E mündet.

Die Sekundärseite des Wärmetauschers WT weist einen Eingang E2 auf, der mit einer Leitung 55 verbunden ist, welche an einen (nicht gezeigten) Brauchwasseranschluss angeschlossen ist. Der Ausgang A2 der Sekundärseite des Wärmetauschers WT ist mit einer Leitung 56 verbunden, die zu einem Warmwasserabnehmer 100, beispielsweise einer Dusche, führt.

Vor dem Eingang E2 des Wärmetauschers WT befindet sich ein Massenströmungssensor MS, der ein Massenströmungssignal S1 entsprechend der Massenströmung in der Leitung 50 an die Steuereinrichtung ST liefert. In Massenströmungsrichtung hinter dem Wärmetauscher WT befindet sich ein Temperatursensor T1, der ein Temperatursignal S2 entsprechend der Temperatur des aus dem Wärmetauscher WT austretenden erwärmten Brauchwassers an die Steuereinrichtung ST liefert.

Da die vom Heißwasserspeicher 50 maximal lieferbare Temperatur variieren kann, wird ebenfalls ein Signal S3 eines zweiten Temperatursensors T2 an der Oberseite des Heißwasserspeichers 50 an die Steuereinrichtung ST geliefert und bei der Berechnung des Ansteuersignals SS berücksichtigt.

Basierend auf den Steuersignalen S1, S2, S3 und einem Sollwert S1b für die Temperatur des zu erwärmenden Brauchwasser berechnet die Steuereinrichtung ST das Ansteuersignal SS für die Pumpe P.

Als nachteilhaft bei der in Fig. 3 bekannten Vorrichtung zum Bereitstellen von erwärmtem Brauchwasser hat sich die Tatsache herausgestellt, dass Schwankungen der Temperatur des erwärmten Brauchwassers in der Leitung 56 auftreten, welche auch durch Anwendung einer speziellen Regelungsprozedur in der Steuereinrichtung ST, wie sie beispielsweise in der DE 43 05 870 C2 offenbart wird, nicht vollständig verhindert werden.

Weiterhin ist die Tatsache nachteilhaft, dass bei abgeschalteter Pumpe P Wasser von der Leitung 58 in die Leitung 57 und damit in den Heißwasserspeicher 50 aufgrund der Schwerkraft drückt und daher unter Umständen zu einer Verkalkung des Wärmetauschers WT beiträgt.

Die der vorliegenden Erfindung zugrundeliegende Aufgabe besteht darin, ein Verfahren und eine Vorrichtung zum Bereitstellen von über eine Wärmetauschereinrichtung erwärmtem Brauchwasser und ein Verfahren zum Betreiben einer Wärmetauschereinrichtung zu schaffen, wobei geringere Schwankungen der Brauchwassertemperatur auf der Sekundärseite erzielbar sind.

Das erfindungsgemässe Verfahren zum Bereitstellen von über eine Wärmetauschereinrichtung erwärmtem Brauchwasser nach Anspruch 1 und die entsprechende erfindungsgemässe Vorrichtung nach Anspruch 11 sowie das erfindungsgemässe Verfahren zum Betreiben einer Wärmetauschereinrichtung nach Anspruch 21 weisen den Vorteil auf, dass die Ansteuerung nicht auf Besonderheiten von Pumpe bzw. Wärmetauscher abgestimmt werden muss, da die Zielgrösse ein Massenstrom ist und keine Temperatur. Auch können Störeinflüsse auf die Strömung, z.B. durch Schwerkraft oder Querströmungen, weitgehend ausgeglichen werden.

In den Unteransprüchen finden sich vorteilhafte Weiterbildungen und Verbesserungen des jeweiligen Gegenstandes der Erfindung.

Gemäss einer bevorzugten Weiterbildung erfolgt das Festlegen der Massenströmung S2b gemäss folgender Beziehung:

$$S2b = S2a \cdot (S1b-S1a)/(S1c-S1d).$$

Gemäss einer weiteren bevorzugten Weiterbildung erfolgt ein Erfassen der Temperatur S1b des dem zweiten Ausgang abgeführten Brauchwassers.

Gemäss einer weiteren bevorzugten Weiterbildung erfolgt das Erfassen der Temperaturen S1a, S1b, S1c, S1d mittels einer jeweiligen Temperaturerfassungseinrichtung, die in der Nähe, vorzugsweise in einer Entferung von weniger als einem Meter, des zugehörigen Eingangs bzw. Ausgangs der Wärmetauschereinrichtung angeordnet ist.

Gemäss einer weiteren bevorzugten Weiterbildung ist die jeweilige Temperaturerfassungseinrichtung im Innern der Wärmetauschereinrichtung angeordnet.

Gemäss einer weiteren bevorzugten Weiterbildung erfolgt ein Erfassen der Massenströmung S2a an der Sekundärseite mittels einer ersten Massenströmungserfassungseinrichtung, die in Sekundärmassenströmungsrichtung vor dem zweiten Eingang der Wärmetauschereinrichtung angeordnet ist.

Gemäss einer weiteren bevorzugten Weiterbildung erfolgt das Erfassen der Massenströmung S2b an der Primärseite mittels einer zweiten Massenströmungserfassungseinrichtung, die in Primärmassenströmungsrichtung hinter dem ersten Ausgang der Wärmetauschereinrichtung angeordnet ist.

Gemäss einer weiteren bevorzugten Weiterbildung wird der Wärmetauschereinrichtung primärseitig das Heisswasser von einer Heisswasserspeichereinrichtung zugeführt.

Gemäss einer weiteren bevorzugten Weiterbildung wird das Heisswasser in einem Umwälzkreis an der Oberseite der Heisswasserspeichereinrichtung entnommen und an der Unterseite der Heisswasserspeichereinrichtung wieder zugeführt.

Gemäss einer weiteren bevorzugten Weiterbildung werden erste Eingang und erste Ausgang der Wärmetauschereinrichtung auf einem Niveau im wesentlichen gleich oder unterhalb eines Niveaus eines Rückflusseinlasses der Heisswasserspeichereinrichtung derart angeordnet werden, dass bei abgeschalteter Pumpe der hydrostatische Druck am ersten Ausgang mindestens so gross ist wie der hydrostatische Druck am ersten Eingang.

Ausführungsbeispiele der Erfindung sind in den Zeichnungen dargestellt und in der nachfolgenden Beschreibung näher erläutert.

Es zeigen:

Fig. 1   eine schematische Querschnittsansicht einer Vorrichtung zum Bereitstellen von über eine Wärmetauschereinrichtung erwärmtem Brauchwasser gemäss einer ersten Ausführungsform der vorliegenden Erfindung;

Fig. 2   eine schematische Querschnittsansicht einer Vorrichtung zum Bereitstellen von über eine Wärmetauschereinrichtung erwärmtem Brauchwasser gemäss einer zweiten Ausführungsform der vorliegenden Erfindung; und

Fig. 3   eine schematische Querschnittsansicht einer aus der DE 40 35 115 C2 bekannten Vorrichtung zum Bereitstellen von über eine Wärmetauschereinrichtung erwärmtem Brauchwasser.

In den Figuren bezeichnen gleiche Bezugszeichen gleiche oder funktionsgleiche Bestandteile.

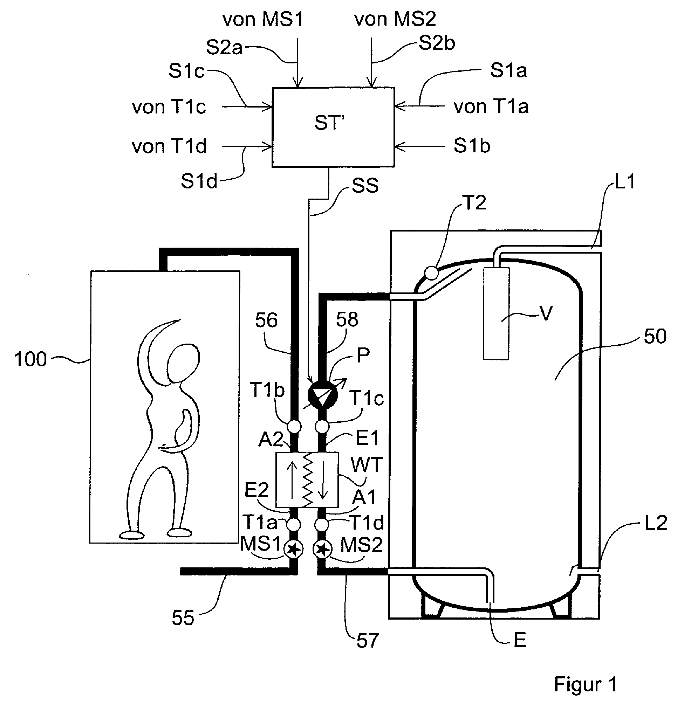

Fig. 1 ist eine schematische Querschnittsansicht einer Vorrichtung zum Bereitstellen von über eine Wärmetauschereinrichtung erwärmtem Brauchwasser gemäss einer ersten Ausführungsform der vorliegenden Erfindung.

Bei der in Fig. 1 gezeigten ersten Ausführungsform sind die Anordnungen der Leitungen 55, 56, 57, 58 und des Wärmetauschers WT sowie der Pumpe P identisch wie bei dem im Zusammenhang mit Fig. 3 eingangs erläuterten Beispiel.

Im Unterschied dazu sind bei dieser Ausführungsform ein erster Temperatursensor T1a vor dem zweiten Eingang E2 des Wärmetauschers WT, ein zweiter Temperatursensor T1b hinter dem zweiten Ausgang A2 des Wärmetauschers WT, ein dritter Temperatursensor T1c vor dem ersten Eingang E1 des Wärmetauschers WT sowie ein vierter Temperatursensor T1d vor dem ersten Ausgang A1 des Wärmetauschers WT vorgesehen.

Weiterhin vorgesehen sind ein erster Massenströmungssensor MS1 in der Leitung 55 in Massenströmungsrichtung vor dem zweiten Eingang des Wärmetauschers WT sowie ein zweiter Massenströmungssensor MS2 in Massenströmungsrichtung hinter dem ersten Ausgang A1 des Wärmetauschers WT. Die Temperatursignale der Temperatursensoren T1a, T1c, T1d, nämlich die Signale S1a, S1c, S1d werden genau wie die Massenströmungssignale S2a, S2b der Massenströmungssensoren MS1, MS2 an die modifizierte Steuereinrichtung ST' geliefert, welche daraus und einem Sollwert S1b für die Temperatur des zu erwärmenden Brauchwassers das Ansteuersignal SS für die steuerbare Pumpe P berechnet.

Beim vorliegenden Beispiel geschieht diese Berechnung der Soll-Massenströmung S2b mit dem Sollwert für die Temperatur S1b des zu erwärmenden Brauchwassers und mit der Maßgabe, dass der Wärmestrom auf der Primärseite gleich sein muss wie der Wärmestrom auf der Sekundärseite.

Daraus ergibt sich folgende Beziehung:

$$S2b = S2a \cdot (S1b\text{-}S1a) \: / \: (S1c\text{-}S1d) \qquad (1)$$

Die Steuereinrichtung ST' legt aus der so berechneten Soll-Massenströmung S2b das Ansteuersignal SS für die Pumpe P fest und regelt die Ansteuerung anhand der empfangenen erfassten Signale.

Die erfasste Temperatur S1b des Temperatursensors T1b dient nur zur Überwachung, z.B. auf einer (nicht dargestellten) Anzeige, aber nicht für die Steuereinrichtung ST'.

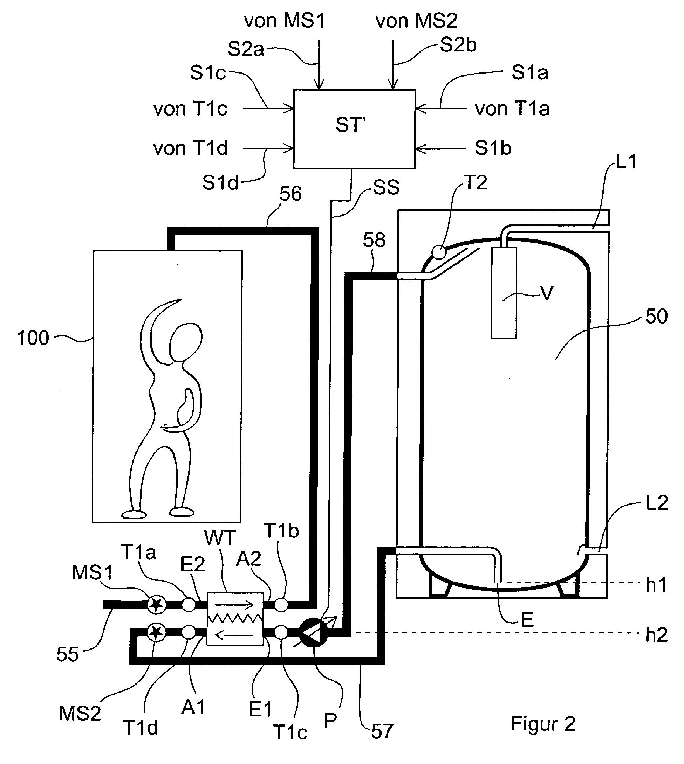

Fig. 2 ist eine schematische Querschnittsansicht einer Vorrichtung zum Bereitstellen von über eine Wärmetauschereinrichtung erwärmten Brauchwasser gemäss einer zweiten Ausführungsform der vorliegenden Erfindung.

Bei der in Fig. 2 beschriebenen zweiten Ausführungsform ist die Anordnung der Steuereinrichtung ST' sowie der Sensoren T1a bis T1d bzw. MS1, MS2 genau wie bei der zuvor beschriebenen ersten Ausführungsform.

Im Unterschied dazu sind bei dieser zweiten Ausführungsform der erste Eingang E1 und der erste Ausgang A1 des Wärmetauschers WT auf einem Niveau h2 unterhalb eines Niveaus h1 des Rückflusseinlasses E des Heißwasserspeichers 50 derat angeordnet, dass bei abgeschalteter Pumpe P der hydrostatische Druck am ersten Ausgang A1 mindestens so groß ist wie der hydrostatische Druck am ersten Eingang E1. Dies hat zur Folge, dass kein Wasser bei abgeschalteter Pumpe P durch den Wärmetauscher WT durch den Rückflusseinlass E gedrückt werden kann und somit eine Verkalkung der Wärmetauschereinrichtung WT vermieden werden kann. Hierzu sei noch bemerkt, dass das Niveau h2 auch im wesentlichen gleich wie das Niveau h1 liegen kann.

Obwohl die vorliegenden Erfindung vorstehend anhand bevorzugter Ausführungsbeispiele beschrieben wurde, ist sie darauf nicht beschränkt, sondern vielfältig modifizierbar.

In diesem Zusammenhang sei erwähnt, dass bei den Ausführungsbeispielen die Temperatursensoren T1a, T1b, T1c und T1d unmittelbar vor bzw. hinter dem Wärmetauscher in den Leitungen 55 bis 58 angeordnet sind. Es ist jedoch ebenfalls möglich, die Temperatursensoren T1a bis T1d in den Wärmetauscher selbst zu integrieren. Auch müssen die Massenströmungssensoren MS1, MS2 nicht unbedingt an den angegebenen Stellen angeordnet sein, sondern können prinzipiell an beliebiger Stelle im Primärkreis bzw. Sekundärkreis angeordnet sein.

Weiterhin beschreibt die obige Formel (1) einen symmetrischen Fall des Wärmetauschers. Allgemein kann die Beziehung auch Unsymmetrien oder weitere Einflussfaktoren berücksichtigen.

**Patentansprüche**

1. Verfahren zum Bereitstellen von über eine Wärmetauschereinrichtung (WT) erwärmtem Brauchwasser, wobei der Wärmetauschereinrichtung (WT) primärseitig Heisswasser über eine durchflussmengenmässig steuerbare Pumpe (P) von einem ersten Eingang (E1) zu einem ersten Ausgang (A1) zugeführt wird und wobei der Wärmetauschereinrichtung (WT) sekundärseitig an einem zweiten Eingang (E2) Brauchwasser zugeführt wird und an einem zweiten Ausgang (A2) das erwärmte Brauchwasser entnommen wird, mit den Schritten:

Erfassen der Temperatur S1a des dem zweiten Eingang (E2) zugeführten Brauchwassers und der Temperatur S1c des dem ersten Eingang (E1) zugeführten Heisswassers;

Erfassen der Temperatur S1d des dem ersten Ausgang (A1) abgeführten Heisswassers;

Erfassen der Massenströmung S2a an der Sekundärseite; und

Festlegen eines Sollwertes der Massenströmung S2b an der Primärseite unter Berücksichtigung der erfassten Temperaturen S1a, S1c, S1d und der erfassten Massenströmung S2a und einem Sollwert S1b für die Temperatur des erwärmten Brauchwassers;

**dadurch gekennzeichnet, dass**
ein Erfassen der Massenströmung S2b an der Primärseite erfolgt; und
ein Regeln der Massenströmung S2b an der Primärseite auf den festgelegten Sollwert mittels der Pumpe (P) in Abhängigkeit von der erfassten Massenströmung S2b an der Primärseite. erfolgt.

2. Verfahren nach Anspruch 1, **dadurch gekennzeichnet, dass** das Festlegen der Massenströmung S2b gemäss folgender Beziehung erfolgt:

$$S2b = S2a \cdot (S1b-S1a)/(S1c-S1d).$$

3. Verfahren nach Anspruch 1 oder 2, **dadurch gekennzeichnet, dass** ein Erfassen der Temperatur S1b des dem zweiten Ausgang (A2) abgeführten Brauchwassers erfolgt.

4. Verfahren nach Anspruch 1, 2 oder 3, **dadurch gekennzeichnet, dass** das Erfassen der Temperaturen S1a, S1b, S1c S1d mittels einer jeweiligen Temperaturerfassungseinrichtung (T1a; T1b; T1c; T1d) erfolgt, die in der Nähe, vorzugsweise in einer Entferung von weniger als einem Meter, des zugehörigen Eingangs (E1; E2) bzw. Ausgangs (A1; A2) der Wärmetauschereinrichtung (WT) angeordnet ist.

5. Verfahren nach Anspruch 4, **dadurch gekennzeichnet, dass** die jeweilige Temperaturerfassungseinrichtung (T1a; T1b; T1c; T1d) im Innern der Wärmetauschereinrichtung (WT) angeordnet ist.

6. Verfahren nach mindestens einem der vorhergehenden Ansprüche, **dadurch gekennzeichnet, dass** ein Erfassen der Massenströmung S2a an der Sekundärseite mittels einer ersten Massenströmungserfassungseinrichtung (MS1) erfolgt, die in Sekundärmassenströmungsrichtung vor dem zweiten Eingang (E2) der Wärmetauschereinrichtung (WT) angeordnet ist.

7. Verfahren nach mindestens einem der vorhergehenden Ansprüche, **dadurch gekennzeichnet, dass** das Erfassen der Massenströmung S2b an der Primärseite mittels einer zweiten Massenströmungserfassungseinrichtung (MS2) erfolgt, die in Primärmassenströmungsrichtung hinter dem ersten Ausgang (A1) der Wärmetauschereinrichtung (WT) angeordnet ist.

8. Verfahren nach mindestens einem der vorhergehenden Ansprüche, **dadurch gekennzeichnet, dass** der Wärmetauschereinrichtung (WT) primärseitig das Heisswasser von einer Heisswasserspeichereinrichtung (50) zugeführt wird.

9. Verfahren nach Anspruch 8, **dadurch gekennzeichnet, dass** das Heisswasser in einem Umwälzkreis an der Oberseite der Heisswasserspeichereinrichtung (50) entnommen und an der Unterseite der Heisswasserspeichereinrichtung (50) wieder zugeführt wird.

10. Verfahren nach Anspruch 19, **dadurch gekennzeichnet, dass** der erste Eingang (E1) und erste Ausgangs (A2) der Wärmetauschereinrichtung (WT) auf einem Niveau (h2) im wesentlich gleich oder unterhalb eines Niveaus (h1) eines Rückflusseinlasses (E) der Heisswasserspeichereinrichtung (50) derart angeordnet werden, dass bei abgeschalteter Pumpe (P) der hydrostatische Druck am ersten Ausgang (A1) mindestens so gross ist wie der hydrostatische Druck am ersten Eingang (E1).

11. Vorrichtung zum Bereitstellen von über eine Wärmetauschereinrichtung (WT) erwärmtem Brauchwasser, wobei der Wärmetauschereinrichtung (WT) primärseitig Heisswasser über eine durchflussmengenmässig steuerbare Pumpe (P) von einem ersten Eingang (E1) zu einem ersten Ausgang (A1) zuführbar ist und wobei der Wärmetauschereinrichtung (WT) sekundärseitig an einem zweiten Eingang (E2) Brauchwasser zuführbar ist und an einem zweiten Ausgang (A2) das erwärmte Brauchwasser entnehmbar ist, mit:

einer ersten Temperaturerfassungseinrichtung (T1a) zum Erfassen der Temperatur S1a des dem zweiten Eingang (E2) zugeführten Brauchwassers und einer zweiten Temperaturerfassungseinrichtung (T1c) zum Erfassen der Temperatur S1c des dem ersten Eingang (E1) zugeführten Heisswassers;

einer dritten Temperaturerfassungseinrichtung (T1d) zum Erfassen der Temperatur S1d des dem ersten Ausgang (A1) abgeführten Heisswassers;

einer ersten Massenströmungserfassungseinrichtung (MS1) zum Erfassen der Massenströmung S2a an der Sekundärseite;

einer Festlegungseinrichtung (ST') zum Festlegen eines Sollwertes der Massenströmung S2b an der Primärseite unter Berücksichtigung der erfassten Temperaturen S1a, S1c, S1d und der erfassten Massenströmung S2a und einem Sollwert S1b für die Temperatur des erwärmten Brauchwassers;

**gekennzeichnet durch**

eine zweite Massenströmungserfassungseinrichtung (MS2) zum Erfassen der Massenströmung S2b an der Primärseite; und

eine in einer Steuereinrichtung (ST') vorgesehene Regelung zum Regeln der Massenströmung S2b an der Primärseite auf den festgelegten Sollwert mittels der Pumpe (P) in Abhängigkeit von der erfassten Massenströmung S2b an der Primärseite.

12. Vorrichtung nach Anspruch 11, **dadurch gekennzeichnet, dass** die Festlegungseinrichtung (ST') das Festlegen der Massenströmung S2b gemäss folgender Beziehung durchführt:

$$S2b = S2a \cdot (S1b - S1a) / (S1c - S1d).$$

13. Vorrichtung nach Anspruch 11 oder 12, **dadurch gekennzeichnet, dass** eine vierte Temperaturerfassungseinrichtung (T1b) zum Erfassen der Temperatur S1b des dem zweiten Ausgang (A2) abgeführten Brauchwassers vorgesehen ist.

14. Vorrichtung nach Anspruch 11, 12 oder 13, **dadurch gekennzeichnet, dass** die jeweilige Temperaturerfassungseinrichtung (T1a; T1b; T1c; T1d) in der Nähe, vorzugsweise in einer Entfernung von weniger als einem Meter, des zugehörigen Eingangs (E1; E2) bzw. Ausgangs (A1; A2) der Wärmetauschereinrichtung (WT) angeordnet ist.

15. Vorrichtung nach Anspruch 14, **dadurch gekennzeichnet, dass** die jeweilige Temperaturerfassungseinrichtung (T1a; T1b; T1c; T1d) im Innern der Wärmetauschereinrichtung (WT) angeordnet ist.

**16.** Vorrichtung nach mindestens einem der vorhergehenden Ansprüche 11 bis 15, **dadurch gekennzeichnet, dass** die erste Massenströmungserfassungseinrichtung (MS1) in Sekundärmassenströmungsrichtung vor dem zweiten Eingang (E2) der Wärmetauschereinrichtung (WT) angeordnet ist.

**17.** Vorrichtung nach mindestens einem der vorhergehenden Ansprüche 11 bis 16, **dadurch gekennzeichnet, dass** die zweite Massenströmungserfassungseinrichtung (MS2) zum Erfassen der Massenströmung S2b an der Primärseite in Primärmassenströmungsrichtung hinter dem ersten Ausgang (A1) der Wärmetauschereinrichtung (WT) angeordnet ist.

**18.** Vorrichtung nach mindestens einem der vorhergehenden Ansprüche 11 bis 16, **dadurch gekennzeichnet, dass** der Wärmetauschereinrichtung (WT) primärseitig das Heisswasser von einer Heisswasserspeichereinrichtung (50) zuführbar ist.

**19.** Vorrichtung nach Anspruch 18, **dadurch gekennzeichnet, dass** das Heisswasser in einem Umwälzkreis an der Oberseite der Heisswasserspeichereinrichtung (50) entnommen und an der Unterseite der Heisswasserspeichereinrichtung (50) wieder zugeführt wird.

**20.** Vorrichtung nach Anspruch 19, **dadurch gekennzeichnet, dass** der erste Eingang (E1) und erste Ausgangs (A2) der Wärmetauschereinrichtung (WT) auf einem Niveau (h2) im wesentlichen gleich oder unterhalb eines Niveaus (h1) eines Rückflusseinlasses (E) der Heisswasserspeichereinrichtung (50) derart angeordnet sind, dass bei abgeschalteter Pumpe (P) der hydrostatische Druck am ersten Ausgang (A1) mindestens so gross ist wie der hydrostatische Druck am ersten Eingang (E1).

**21.** Verfahren zum Betreiben einer Wärmetauschereinrichtung (WT), der primärseitig an einem ersten Eingang (E1) ein heisses erstes Liquid zugeführt wird und an einem ersten Ausgang (A1) erkaltetes erstes Liquid entnommen wird und der sekundärseitig an einem zweiten Eingang (E2) ein kaltes zweites Liquid zuführt wird und an einem zweiten Ausgang (A2) erwärmtes zweites Liquid entnommen wird, mit den Schritten:

Erfassen der Temperatur S1a des dem zweiten Eingang (E2) zugeführten zweiten Liquids und der Temperatur S1c des dem ersten Eingang (E1) zugeführten ersten Liquids;

Erfassen der Temperatur S1d des dem ersten Ausgang (A1) abgeführten erkalteten ersten Liquids;

Erfassen der Massenströmung S2a an der Sekundärseite;

Festlegen eines Sollwertes der Massenströmung S2b an der Primärseite unter Berücksichtigung der erfassten Temperaturen S1a, S1c, S1d und der erfassten Massenströmung S2a und einem Sollwert S1b für die Temperatur erwärmten zweiten Liquids;

**gekennzeichnet durch** die Schritte:

Erfassen der Massenströmung S2b an der Primärseite; und

Regeln der Massenströmung S2b an der Primärseite auf den festgelegten Sollwert mittels der Pumpe (P) in Abhängigkeit von der erfassten Massenströmung S2b an der Primärseite.

**22.** Verfahren nach Anspruch 21, **dadurch gekennzeichnet, dass** das Festlegen der Massenströmung S2b gemäss folgender Beziehung erfolgt:

$$S2b = S2a \cdot (S1b-S1a) / (S1c-S1d).$$

Figur 1

Figur 2

Stand der Technik                    Figur 3